# EUROPEAN PATENT APPLICATION

(11) **EP 2 582 007 A1**
(43) Date of publication of application: **17.04.2013**
(21) Application number: 11185322.2
(22) Date of filing: 14.10.2011
(51) Int. Cl.: H02J 7/00, H02J 7/04

(54) **Mode changing power control**

(71) Applicant: Research In Motion Limited, Waterloo, ON N2L 3W8 (CA)
(72) Inventor: Patino, Joseph, Sunrise, FL 33323 (US); Rodriguez, Roberto, Sunrise, FL 33323 (US)
(74) Representative: Roberts, Gwilym Vaughan

(57) **Abstract**

Methods (400, 500) and systems (200, 300) for controlling a power pack charging circuit (210, 310). While a device (202, 302) is connected to an electrical charging source (204, 304), a determination (402, 502) is made that an operating condition of a device satisfies a condition for halting charging of a power pack (214, 314) of the device. While the operating condition of the device satisfies the condition for halting charging of the power pack, a power pack output value is determined (406, 506). While the operating condition of the device satisfies the condition for halting charging of the power pack, a power pack charging circuit output characteristic is set (408, 508) to an output value that is determined based upon the power pack output value to preclude charging of the power pack.

## Description

### FIELD OF THE DISCLOSURE

The present disclosure generally relates to the recharging of rechargeable power packs and more particularly to controlling the charging of rechargeable power packs near or in an over-temperature condition.

### BACKGROUND

Electronic devices, such as portable electronic devices, include power packs such as batteries to provide operating power to the device. Devices with power packs also accept power from external power supplies to power circuits in the electronic device as well as to charge the power pack. Charging circuits in some devices protect power packs by halting charging when the power pack temperature exceeds a threshold. The smaller size combined with increasing processing and data rate capacities of some devices result in increased buildup of un-dissipated heat in the device. This buildup of heat during normal device operation causes the device's temperature, including the temperature of its power pack, to increase above the level at which power pack charging is discontinued. Some devices halt charging of the power pack by electrically isolating, such as by a semiconductor "switch," the connected external power supply from the electronic circuits of the device, thereby electrically disconnecting the charging power supply from the operating circuits of the device as well as the power pack. Although an external power supply is connected to the device, the power pack discharges because charging of the power pack is ceased during periods of high, but still expected, power consumption that causes the electronic device to increase in temperature.

Therefore, the ability of electronic devices to continue operations in high power consumption modes while connected to a charging power supply is limited by ceasing charging as power pack temperature increases.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is a device interconnection diagram according to one example;

FIG. 2 is a first circuit diagram illustrating electrical power components of an electronic device, according to one example;

FIG. 3 is a second circuit diagram illustrating electrical power components of an alternative electronic device;

FIG. 4 is a charging circuit output voltage setting process, in accordance with one example;

FIG. 5 is a charging circuit electrical current output setting process, in accordance with one example; and

FIG. 6 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defmed as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function

In the following discussion, power pack capacity refers to a present energy capacity of a power pack, such as a power pack. For example, power pack capacity may refer to a number of Amp-Hours remaining within a power pack or a percentage of the power pack's total designed capacity when fully charged. Power pack capacity as used below generally refers to a charge level of a power pack or a comparable measure of any suitable power pack.

Described below are systems and methods for use in a electronic device that allow the device to continue to be powered by a charging power supply while the device's power pack is above an acceptable temperature to continue charging or when the power pack is otherwise unable to be charged. In one example, the electronic device includes components that dissipate enough thermal energy to raise the temperature of a power pack of the device above a threshold at which charging of that power pack charging is halted. These systems and methods operate to configure the power pack charging circuit to provide electrical power to support operation of the electronic device while causing the power pack to not be charged. The systems and methods described below allow simplified power supply circuits to utilize charging power supplies without requiring additional circuitry to electrically isolate the power pack from the charging power supply. Further, these systems and methods allow a device to use the power pack to provide electrical current in excess of the capability of charging power supply even when charging is halted due to the temperature of the power pack.

Some electronic devices with rechargeable power packs monitor the temperature of their power pack or power packs while providing charging current to recharge the power pack or power packs. Charging of the power pack or of a component power pack in a number of power packs of the electronic device is halted if the temperature of that power pack exceeds a defined temperature threshold. The temperature threshold for a power pack at which charging is halted is referred to below as a charging cutoff temperature threshold. The temperature of a power pack is able to increase above this charging cutoff temperature threshold due to resistive heating in the power pack caused by the charging current passing through the power pack. The temperature of the power pack is also, however, able to be increased by heat being dissipated by other components of the device in which the power pack is mounted.

Some power packs, such as rechargeable batteries, have specified temperatures at or above which charging should not occur. The designs of various example electronic devices are able to halt power pack charging at various temperatures based on differing conditions. In the following discussion, the charging cutoff temperature threshold is able to be any temperature value at which the electronic device is configured to halt charging of the power pack.

In order to allow an electronic device to continue to operate when the power pack has reached a temperature above which it should not be charged, the below described systems and methods determine the open circuit voltage or electrical current output of the power pack when no charging current is applied. The power pack charging circuit is then configured to produce either the open circuit output voltage or the electrical current output of the power pack in order to provide the circuits of the electronic device with electrical power. The designs of the systems and methods described below allow the power pack to remain in electrical connection with operating circuits of the device in order to support relatively sudden increases in electrical current draw, such as may result by initiating high power radio frequency transmissions.

The below described system and method are also able to allow operation when power pack recharging is precluded due to other factors. For example, charging may be precluded due to a detected power pack cell failure or other anomaly.

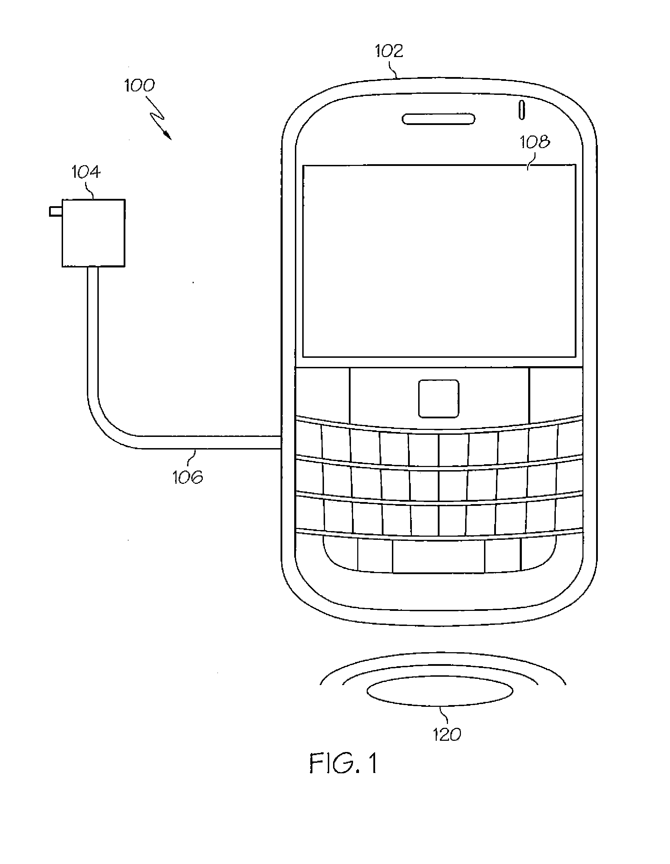

FIG. 1 is a device interconnection diagram 100 according to one example. The device interconnection diagram 100 shows a portable electronic device 102, such as a Personal Digital Assistant (PDA), a smart-phone, a cellular telephone, or any other type of portable electronic device. The portable electronic device 102 depicted in FIG. 1 may be handheld, that is, sized and shaped to be held or carried in a human hand. The portable electronic device 102 receives external power from an external power source 104 power through one or more interfaces, such as a DC power connection 106.

As an alternative to receiving power through a DC power connection 106, external power is also able to be provided through a wireless charging base 120. In one example, a wireless charging base 120 wirelessly provides external power to the portable electronic device 102 through, for example, inductive coupling or other suitable techniques. The external power source 104 and the wireless charging base 120 are examples of a charging source that provides electrical energy to a power pack charging circuit within the portable electronic device 102.

The portable electronic device 102 has a display 108. The display 108 depicted in FIG. 1 is an alpha numeric display capable of displaying various images, such as alphanumeric characters, icons, and the like.

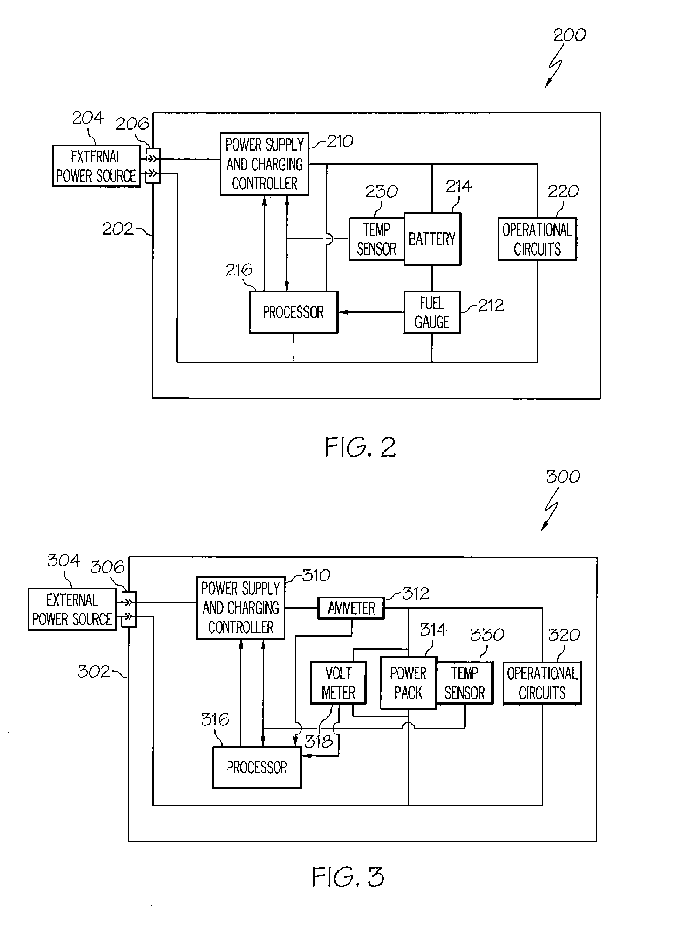

FIG. 2 is a first circuit diagram 200 illustrating electrical power components of an electronic device, according to one example. The first circuit diagram 200 illustrates a portion of an example of circuits included in the portable electronic device 102 discussed above. In the first circuit diagram 200, an external power source 204 is connected to an example electronic device 202 through an external power connection 206. In one example, the example electronic device 202 is able to include components of a communications circuit.

The example electronic device 202 further includes a power pack 214 that in one example includes a rechargeable battery. Further examples include any suitable power pack. The power pack 214 is used as a power source when, for example, the external power source 204 is not connected to the example electronic device 202. The power pack 214 is also able to supplement the electrical current provided by an external power source 204 when, for example, the electrical current demands of the electronic device 202 exceed the capabilities of the external power source 204.

The example electronic device 202 includes a power pack charging circuit, illustrated as a power supply and charging controller 210, that controls charging of the power pack 214 when the external power source 204 is connected to the external power connector 206. The power pack 214 of one example is coupled to a power pack status monitor that is a temperature sensor 230. Temperature sensor 230 determines the temperature of the power pack 214 and reports that temperature to the power supply and charging controller 210. The power supply and charging controller 210 of one example provides amounts of electrical current to the power pack 214 based upon a several factors such as a determined present power pack capacity of the power pack 214. The power supply and charging controller 210 in one example also operates to halt charging of the power pack 214 when the temperature of the power pack 214, as determined by the temperature sensor 230, exceeds a charging cutoff temperature threshold. If the temperature of the power pack again goes below that threshold, the power supply and charging controller 210 resumes charging the power pack 214. As discussed below, the power supply and charging controller 210 is also able to be configured to supply electrical current to the electronic device 202 such that charging of the power pack is precluded.

The example electronic device 202 includes operating circuits 220 that are electronic circuits that perform, for example, processing associated with a cellular telephone, a smart phone, a personal digital assistant (PDA), or some or all of any processing required by the example electronic device 202. In various examples, the operating circuits include data processing circuits, voice processing circuits, or combinations of data and voice processing circuits that process data, voice, or data and voice in conjunction with actions taken by a user of the example electronic device 202. The operating circuits are able to receive, transmit, or receive and transmit data, voice, or data and voice signals with remote devices through radio interfaces. The operating circuits 220 obtain electrical power either from the power pack 214 or the power supply and charging controller 210 if an external power source 204 is connected to the device 202.

In one example, the operating circuits 220 include electronic components, such as RF power amplifiers, GPS receivers, and similar components, that are able to operate in modes that dissipate significant levels of heat. The heat dissipated by the operating circuits 220 in some situations, particularly during times of higher ambient temperatures, is able to raise the temperature of the power pack 214 to a level that causes the power supply and charging controller 210 to halt charging of the power pack 214. The temperature at which charging of the power pack 214 is halted is referred to below as a charging cutoff temperature threshold. As described in further detail below, when the temperature of the power pack exceeds the charging cutoff temperature threshold, the power supply and charging controller 210 sets a value of a characteristic of its output so as to provide electrical power to the operating circuits 220 without providing charging electrical current to the power pack 214. In one example, the electrical current output or output voltage of the power supply and charging controller 210 are output characteristics whose value are able to be set in response to the temperature of the power pack exceeding the charging cutoff temperature threshold. For example, the output current or voltage of the power supply and charging controller 210 is set to be equal to the value of electrical current consumed by the operating circuits 220, thereby resulting in no electrical current being delivered to the power pack 214.

In one example, the charging cutoff temperature threshold is related to a maximum power pack charging temperature and is able to be configured to be a few degrees below the maximum power pack charging temperature. The charging cutoff temperature threshold is configured or programmed into the processor 216 during device manufacturing or configuration. The charging cutoff temperature threshold in other examples is able to be provided to the processor 216 by any technique.

A battery fuel gauge 212 is an example of a power pack output monitor that is used in some examples to determine a power pack output value for the power pack 214. In some conditions, such as when the power pack temperature exceeds the charging cutoff temperature threshold, the determined power pack output value is used to set an output value of the power supply and charging controller 210. The battery fuel gauge 212 is a power pack monitoring circuit implemented as a dedicated circuit configured to continually monitor the amount of electrical current being delivered to or taken from the power pack 214. The battery fuel gauge 212 measures a net amount of charging current, or Coulombs, that is delivered to the power pack 214. The battery fuel gauge 212 is also able to determine the power pack electrical current output of the power pack 214. An example of a power pack electrical current output is an average electrical current value produced by the power pack 214 over a time duration. This average electrical current value is a power pack output value that is used, as described below, to set a value of the power supply and charging controller 210 while the power pack is above the charging cutoff temperature threshold.

In one example, the battery fuel gauge 212 also determines an output voltage of the power pack 214. An example of an output voltage of the power pack 214 that is determined by the battery fuel gauge 212 is an open circuit power pack voltage of the power pack 214. This open circuit power pack voltage is a power pack output value that is used, as described below, to set a value of the power supply and charging controller 210 while the power pack is above the charging cutoff temperature threshold.

The illustrated example electronic device 202 depicts the battery fuel gauge 212 connected to a negative side of the power pack 214. Further examples are able to include a battery fuel gauge 212 that is alternatively connected to the positive side of the power pack 214.

The illustrated example electronic device 202 also includes a processor 216 that is an example of a charging circuit controller that performs various operations to control the example electronic device 202. The processor 216 of one example also includes a power pack status monitor receiver that receives values of the power pack temperature from the temperature sensor 230. The processor 216 of one example performs the below described processing that determines if an operating condition of a device satisfies a condition for halting charging of a power pack of the device while the device is connected to a charging source. In one example, this determination is true if the power pack temperature exceeds a charging cutoff temperature threshold. The processor 216 also determines, while the operating condition of the device satisfies the condition for halting charging of the power pack, a power pack output value and sets a power pack charging circuit to that value. Examples of power pack output values include a power pack output voltage and a power pack electrical current output that are determined and reported by, for example, the fuel gauge 212. The processor 216 then sets a power pack charging circuit output of the power supply and charging controller 210 to a value based upon the determined power pack output value. The power pack charging circuit output is set to a value that precludes charging of the power pack. Examples of setting the power pack charging circuit output include setting the power supply and charging controller output voltage to be the open circuit voltage of the power pack 214 or setting a power pack charging circuit electrical current output, which is the value of the output electrical current provided by the power supply and charging controller 210, to a value that is one of equal to or less than the determined power pack electrical current output.

Some implementations include a power supply and charging controller 210 that only has available a finite selection of fixed output voltages, fixed electrical current outputs, or both fixed output voltages and fixed electrical currents. In such implementations, the processor 216 determines a selected value to which an output of the power supply and charging controller 210 is to be set by selecting one of those available finite selections. In general, an output voltage or electrical current output for the power supply and charging controller 210 is selected to be the largest available value that is below a measured power pack output voltage or power pack electrical current output. Setting the power supply and charging controller 210 to have an electrical current output that is closest to and less than the power pack electrical current output allows the power supply and charging controller 210 to supply as much electrical current to the operating circuits 220 as is possible, given the limited selection of output values, without providing electrical current to charge the power pack 214. Alternatively, setting the power supply and charging controller 210 to have an output voltage that is close to but below the power pack output voltage allows the power supply and charging controller 210 to supply electrical current to the operating circuits 220 when the internal resistance of the power pack 214 causes the power pack output voltage to drop to the voltage produced by the power supply and charging controller 210, without providing electrical current to charge the power pack 214.

FIG. 3 is a second circuit diagram 300 illustrating electrical power components of an alternative electronic device 302. The alternative electronic device 302 shares a similar architecture with the example electronic device 202, described above. In one example, the alternative electronic device 302 is able to include components of a communications circuit. The alternative electronic device 302 is connected to an external power source 304 through a suitable interface, such as an external power connection 306 or a wireless charging base 120. A power pack charging circuit, illustrated as a power supply and charging controller 310, controls charging of the power pack 314. The temperature of the power pack 314 is monitored by a temperature sensor 330 that reports power pack temperature to the power supply and charging controller 310 in order to inhibit charging when the power pack becomes too hot. The alternative electronic device 302 also has operational circuits 320 obtain electrical power either from the power pack 314 or the power supply and charging controller 310 if an external power source 304 is connected to the device 302. As discussed above with regards to FIG. 2, the power supply and charging controller 310 is able to be configured to supply electrical current to the electronic device 302 such that charging of the power pack is precluded. The following discussion focuses on differences between the second circuit diagram 300 and the first circuit diagram 200 discussed above.

The processor 316 of the alternative electronic device 302 utilizes alternative techniques to determine output values of the power pack 314. These determined output values of the power pack 314 are used in a manner similar to that discussed above with regards to the first circuit diagram 200 to determine which value to set an output of the power supply and charging controller 310 in order to provide electrical power to the operating circuits 320 but not charge the power pack 314.

The illustrated alternative electronic device 302 depicts both a power pack ammeter 312 in series with the power pack 314 and a power pack voltmeter 318 in parallel with the power pack 314. The power pack ammeter 312 is able to measure one or a sequence of power pack electrical current output values of the power pack 314. The processor 316 determines a value based upon the measured power pack electrical current output values. The power pack voltmeter 318 is able to determine one or a sequence of power pack output voltages, which correspond to the output voltage produced by the power pack 314. The processor 316 determines values to set the output voltage of the power supply and charging controller 310 based upon the measured power pack output voltages.

As discussed above, a particular implementation is able to have a power supply and charging controller 310 that only has available a finite selection of output voltage, electrical current output, or both output voltage and electrical current. In such implementations, the processor 316 determines a value to which an output of the power supply and charging controller 310 is to be set by selecting one of those available finite selections. This determined value is generally an available output voltage or electrical current output setting for the power supply and charging controller 310 that is closest to and less than the corresponding determined power pack output value.

The processor 316 of the alternative electronic device 302 is able to determine a power pack electrical current output through a number of techniques. For example, an instantaneous electrical current measurement is able to be used to determine a value to set an output of the power supply and charging controller 310. Further, a time sequence of power pack electrical current measurements is able to be performed by the ammeter 312 and this time sequence of measurements is processed to determine a composite value upon which a value is determined to set an output of the power supply and charging controller 310.

The illustrated alternative electronic device 302 depicts the ammeter 312 as connected to a positive side of the power pack 314. Further examples are able to include an ammeter 312 that is alternatively connected to the negative side of the power pack 314. Variations of the alternative electronic device 302 are able to include only one of the ammeter 312 and voltmeter 318. Further variations are able to not include either an ammeter 312 or a voltmeter 318.

The illustrated alternative electronic device 302 depicts an ammeter 312 that is in series with the power pack 314. Further examples are able to include one or more ammeters that are substantially in series with the power pack 314. Components may be in a substantially series configuration if they behave substantially as if they were strictly in series, with all or nearly all of the current that passes through one component passing through the other. In a substantially serial arrangement, the ammeter 312 and power pack 314 are able to also have other components coupled in series, such as resistive components, reactive components, active components, or combinations of two or more of these types of components.

The illustrated alternative electronic device 302 also depicts a voltmeter 318 that is in parallel with the power pack 314. Further examples are able to include one or more voltmeters that are substantially in parallel with the power pack 314. Components may be in a substantially parallel configuration if they behave substantially as if they were strictly in parallel. In one example of a substantially parallel configuration, the voltmeter 318 has a positive terminal that is electrically coupled to a positive terminal of the power pack terminal 314. The voltmeter 318 also has a negative terminal that is electrically coupled to a negative terminal of the power pack 314. The one or both of the couplings between the voltmeter 318 and the respective power pack terminal are able to be either direct couplings or indirect couplings. An indirect connection is able to include, as an example, a connection that include resistive components, reactive components, active components, or combinations of two or more of these types of components.

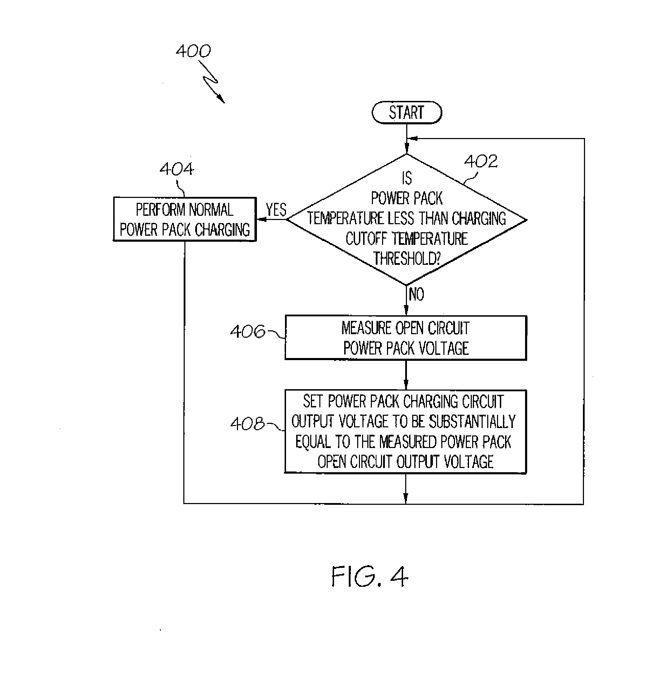

FIG. 4 is a charging circuit output voltage setting process 400, in accordance with one example. The illustrated processing is performed in one example by a processor, such as processor 216 or processor 316 discussed above, that sets an output voltage of a power pack charging circuit, such as the power supply and charging controller 210 or the power supply and charging controller 310.

The charging circuit output voltage setting process 400 begins by determining, at 402, if the power pack temperature is less than a charging cutoff temperature threshold. In one example, this determination is made based upon temperature measurements reported to the processor 216 or the processor 316 by the temperature sensor 230 or the temperature sensor 330, respectively. As discussed above, the charging cutoff temperature is based upon a specified maximum power pack charging temperature for the particular power pack. The charging cutoff temperature threshold is able to be equal to the maximum power pack charging temperature or it is alternatively able to be configured to be a few degrees below the maximum power pack charging temperature.

If it is determined that the power pack temperature is less than the charging cutoff temperature, the charging circuit output voltage setting process 400 in one example continues by performing, at 404, normal power pack charging. If, however, it is determined that the power pack temperature is not less than the charging cutoff temperature, the charging circuit output voltage setting process 400 in one example continues by measuring, at 406, the open circuit power pack voltage. The open circuit power pack voltage is the voltage produced by the power pack 214 or 314 when no electrical current is flowing through the power pack. In various examples, the open circuit power pack voltage is able to be measured by a fuel gauge 212 or voltmeter 318. Alternative examples are able to measure other power pack voltages, such as a loaded power pack voltage. The loaded power pack voltage is an output voltage of the power pack 214 or power pack 314 when it is producing output current to supply the operation circuits 220 or operational circuits 320.

The charging circuit output voltage setting process 400 then continues to set, at 408, the output voltage of the power pack charging circuit, such as the power supply and charging controller 210 or the power supply and charging controller 310, to be substantially equal to the measured power pack open circuit output voltage. Alternative examples are able to set the output voltage of the power pack charging circuit to values that are based on other measured output voltages of the power pack 214 or 314. As discussed above, the power pack charging circuit, such as the power supply and charging controller 210 or the power supply and charging controller 310 may only support setting output voltages to a selected output voltage that is able to be chosen from a limited number of fixed values. In such a case, the charging circuit output voltage setting process 400 sets the power pack charging circuit to an available fixed output voltage that is closest to and less than the measured open circuit output voltage. By configuring the power supply and charging controller 210 or power supply and charging controller 310 to have an output substantially equal to, or close to but less than, the measured power pack open circuit output voltage, the power supply and charging controller provides almost all of the electrical current drawn by the operating circuits 220 or the operating circuits 320. In such a configuration, the power pack provides a small amount of electrical current and will not be depleted as rapidly as in the operation of conventional charging systems that disable the electrical current output of the power supply and charging controller 220 or power supply and charging controller 320 when the temperature of the power pack exceeds a threshold.

After either setting, at 408, the power pack charging circuit output or after performing, at 404, normal power pack charging, the charging circuit output voltage setting process 400 returns to determining, at 402, if the power pack temperature is less than the charging cutoff temperature threshold. In one example, the process performs normal power pack charging, at 404, for a time duration before returning to determining, at 402, if the power pack temperature is less than the charging cutoff temperature threshold. In an example, normal power pack charging is performed for a time duration of one second.

In one example, the charging circuit output voltage setting process 400 continuously operates to iteratively perform each of the above described steps. For example, the charging circuit output voltage setting process 400 continues to iterate and determines, over a number of iterations of measuring, at 406, a power pack output value by measuring a time sequence of power pack output voltages. The charging circuit output voltage setting process 400 then determines, at each iteration of setting, at 408, a time sequence of values that are based on the time sequence of power pack electrical output voltages, and sets, in response to determining each respective value within the time sequence of values, the power pack charging circuit output to the respective value.

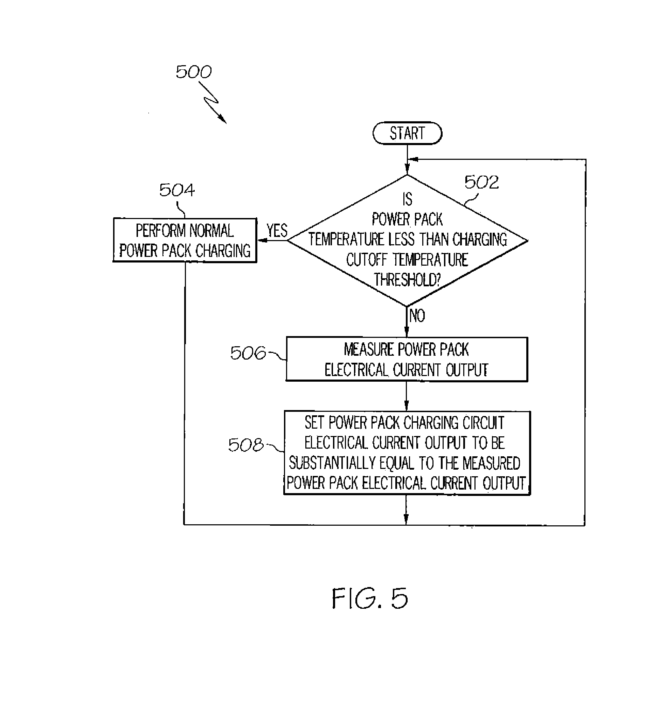

FIG. 5 is a charging circuit electrical current output setting process 500, in accordance with one example. The illustrated processing is performed in one example by a processor, such as processor 216 or processor 316 discussed above, that sets an electrical current output of a power pack charging circuit, such as the power supply and charging controller 210 or the power supply and charging controller 310.

The charging circuit electrical current output setting process 500 begins by determining, at 502, if the power pack temperature is less than a charging cutoff temperature threshold. In one example, this determination is made based upon temperature measurements reported by the temperature sensor 230 or the temperature sensor 330 to the processor 216 or the processor 316. As discussed above, the charging cutoff temperature is based upon a specified maximum power pack charging temperature for the particular power pack. The charging cutoff temperature threshold is able to be equal to the maximum power pack charging temperature or it is alternatively able to be configured to be a few degrees below the maximum power pack charging temperature.

If it is determined that the power pack temperature is less than the charging cutoff temperature, the charging circuit electrical current output setting process 500 in one example continues by performing, at 504, normal power pack charging. If, however, it is determined that the power pack temperature is not less than the charging cutoff temperature, the charging circuit electrical current output setting process 500 in one example continues by measuring, at 506, the power pack electrical current output. In various examples, the power pack electrical current output is able to be measured by a fuel gauge 212 or ammeter 312.

The charging circuit electrical current output setting process 500 then continues to set, at 508, the electrical current output of the power pack charging circuit, such as the power supply and charging controller 210 or the power supply and charging controller 310, to be substantially equal to the measured power pack electrical current output. As discussed above, the power pack charging circuit, such as the power supply and charging controller 210 or the power supply and charging controller 310 may only support setting electrical current outputs to selected output current values that are selected from a limited number of values. In such a case, the charging circuit electrical current output setting process 500 sets the power pack charging circuit to have an electrical current output value that is closest to and less than the measured power pack electrical current output. By configuring the power supply and charging controller 210 or power supply and charging controller 310 to have an output substantially equal to, or close to but less than, the measured power pack electrical current output, the power supply and charging controller provides almost all of the electrical current drawn by the operating circuits 220 or the operating circuits 320. In such a configuration, the power pack provides a small amount of electrical current and will not be depleted as rapidly as in the operations of conventional systems that disable the electrical current output of the power supply and charging controller 220 or power supply and charging controller 320 when the temperature of the power pack exceeds a threshold.

After either setting, at 508, the power pack charging circuit output or after performing, at 504, normal power pack charging, the charging circuit electrical current output setting process 500 returns to determining, at 502, if the power pack temperature is less than the charging cutoff temperature threshold. In one example, the process performs normal power pack charging, at 504, for a time duration before returning to determining, at 502, if the power pack temperature is less than the charging cutoff temperature threshold. In an example, normal power pack charging is performed for a time duration of one second.

In one example, the charging circuit electrical current output setting process 500 continuously operates to iteratively perform each of the above described steps. For example, the charging circuit electrical current output setting process 500 continues to iterate and determines, over a number of iterations of measuring, at 506, a power pack output value by measuring a time sequence of power pack electrical current output values. The charging circuit electrical current output setting process 500 then sets, at each iteration of 508 and in response to determining each respective value within the time sequence of power pack electrical current output values, the power pack charging circuit electrical current output to a value that is one of equal to and less than the respective value within the time sequence of power pack electrical current output values.

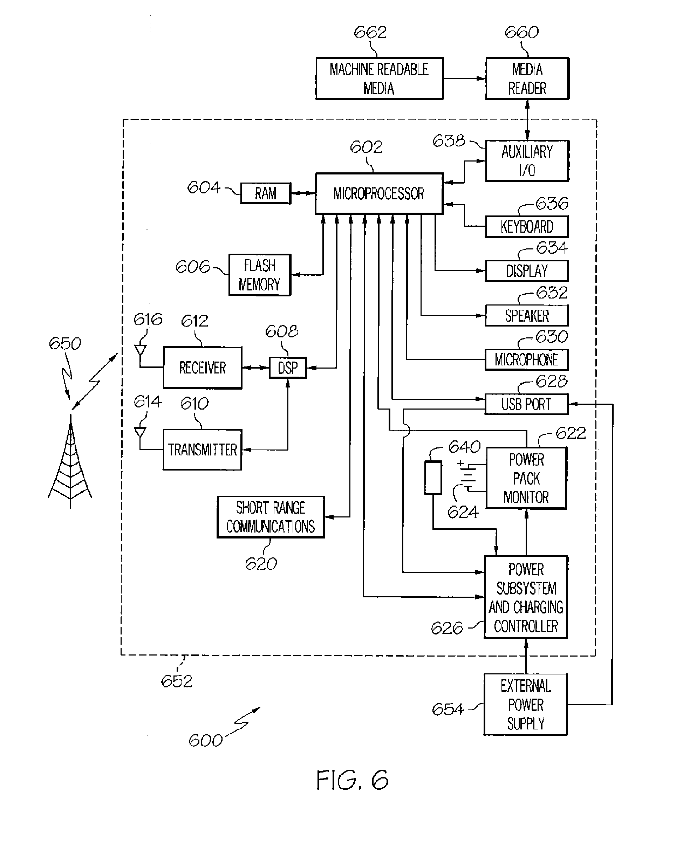

FIG. 6 is a block diagram of an electronic device and associated components 600 in which the systems and methods disclosed herein may be implemented. In this example, an electronic device 652 is a wireless two-way communication device with voice and data communication capabilities. Such electronic devices communicate with a wireless voice or data network 650 using a suitable wireless communications protocol. Wireless voice communications are performed using either an analog or digital wireless communication channel. Data communications allow the electronic device 652 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 652 is an example electronic device that includes two-way wireless communications functions. Such electronic devices incorporate communication subsystem elements such as a wireless transmitter 610, a wireless receiver 612, and associated components such as one or more antenna elements 614 and 616. A digital signal processor (DSP) 608 performs processing to extract data from received wireless signals and to generate signals to be transmitted. The particular design of the communication subsystem is dependent upon the communication network and associated wireless communications protocols with which the device is intended to operate.

The electronic device 652 includes a microprocessor 602 that controls the overall operation of the electronic device 652. The microprocessor 602 interacts with the above described communications subsystem elements and also interacts with other device subsystems such as flash memory 606, random access memory (RAM) 604, auxiliary input/output (I/O) device 638, USB Port 628, display 634, keyboard 636, speaker 632, microphone 630, a short-range communications subsystem 620, a power pack monitor 622, a power subsystem and charging controller 626, and any other device subsystems.

A power pack 624 is connected to a power pack monitor 622 and a power subsystem and charging controller 626 as is described in detail above. The power pack 624 provides power to the circuits of the electronic device 652. The power subsystem and charging controller 626 receives and conditions power from an external power supply 654 for use by circuits within the electronic device 652. The power subsystem and charging controller 626 includes power distribution circuitry for providing power to the electronic device 652 and also contains power pack charging controller circuitry to manage recharging the power pack 624. A power pack temperature monitor 640 monitors the temperature of the power pack 624 and reports the temperature to the power subsystem and charging controller 626. The power subsystem and charging controller 626 halts charging when the power pack temperature exceeds a threshold, but configures itself to provide electrical current to other parts of the electronic device, as is described above. The power subsystem and charging controller 626 and associated components is described above in further detail with regards to FIGs. 2 and 3.

The microprocessor 602 monitors the status and indications produced by the power pack monitor 622 and the power subsystem and charging controller 626 to perform the processing described above with regards to FIGs. 4 and 5.

The USB port 628 provides data communication between the electronic device 652 and one or more external devices. Data communication through USB port 628 enables a user to set preferences through the external device or through a software application and extends the capabilities of the device by enabling information or software exchange through direct connections between the electronic device 652 and external data sources rather than through a wireless data communication network.

Operating system software used by the microprocessor 602 is stored in flash memory 606. Further examples are able to use a power pack backed-up RAM or other non-volatile storage data elements to store operating systems, other executable programs, or both. The operating system software, device application software, or parts thereof, are able to be temporarily loaded into volatile data storage such as RAM 604. Data received via wireless communication signals or through wired communications are also able to be stored to RAM 604. As an example, a computer executable program configured to perform the a charging circuit output voltage setting process 400 and the a charging circuit electrical current output setting process 500, described above, is included in a software module stored in flash memory 606.

The microprocessor 602, in addition to its operating system functions, is able to execute software applications on the electronic device 652. A predetermined set of applications that control basic device operations, including at least data and voice communication applications, is able to be installed on the electronic device 652 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

Further applications may also be loaded onto the electronic device 652 through, for example, the wireless network 650, an auxiliary I/O device 638, USB port 628, short-range communications subsystem 620, or any combination of these interfaces. Such applications are then able to be installed by a user in the RAM 604 or a non-volatile store for execution by the microprocessor 602.

In a data communication mode, a received signal such as a text message or web page download is processed by the communication subsystem, including wireless receiver 612 and wireless transmitter 610, and communicated data is provided the microprocessor 602, which is able to further process the received data for output to the display 634, or alternatively, to an auxiliary I/O device 638 or the USB port 628. A user of the electronic device 652 may also compose data items, such as e-mail messages, using the keyboard 636, which is able to include a complete alphanumeric keyboard or a telephone-type keypad, in conjunction with the display 634 and possibly an auxiliary I/O device 638. Such composed items are then able to be transmitted over a communication network through the communication subsystem.

For voice communications, overall operation of the electronic device 652 is substantially similar, except that received signals are generally provided to a speaker 632 and signals for transmission are generally produced by a microphone 630. Alternative voice or audio I/O subsystems, such as a voice message recording subsystem, may also be implemented on the electronic device 652. Although voice or audio signal output is generally accomplished primarily through the speaker 632, the display 634 may also be used to provide an indication of the identity of a calling party, the duration of a voice call, or other voice call related information, for example.

Depending on conditions or statuses of the electronic device 652, one or more particular functions associated with a subsystem circuit may be disabled, or an entire subsystem circuit may be disabled. For example, if the power pack temperature is high, then voice functions may be disabled, but data communications, such as e-mail, may still be enabled over the communication subsystem.

A short-range communications subsystem 620 is a further optional component which may provide for communication between the electronic device 652 and different systems or devices, which need not necessarily be similar devices. For example, the short-range communications subsystem 620 may include an infrared device and associated circuits and components or a Radio Frequency based communication module such as one supporting Bluetooth^{®} communications, to provide for communication with similarly-enabled systems and devices.

A media reader 660 is able to be connected to an auxiliary I/O device 638 to allow, for example, loading computer readable program code of a computer program product into the electronic device 652 for storage into flash memory 606. One example of a media reader 660 is an optical drive such as a CD/DVD drive, which may be used to store data to and read data from a computer readable medium or storage product such as computer readable storage media 662. Examples of suitable computer readable storage media include optical storage media such as a CD or DVD, magnetic media, or any other suitable data storage device. Media reader 660 is alternatively able to be connected to the electronic device through the USB port 628 or computer readable program code is alternatively able to be provided to the electronic device 652 through the wireless network 650.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method for controlling a power pack charging circuit (210, 310), the method comprising:
determining (402, 502) that an operating condition of a device (202, 302) satisfies a condition for halting charging of a power pack (214, 314) of the device while the device is connected to a charging source (204, 304);
determining, while the operating condition of the device satisfies the condition for halting charging of the power pack, a power pack output value (406, 506); and
setting (408, 508), while the operating condition of the device satisfies the condition for halting charging of the power pack, a power pack charging circuit output characteristic to an output value that is determined based upon the power pack output value to preclude charging of the power pack.

2. The method of claim 1, wherein the determining that the operating condition of the device satisfies the condition for halting power pack charging comprises determining that a power pack temperature exceeds a charging cutoff temperature threshold (402, 502).

3. The method of any of claims 1 or 2, wherein determining the power pack output value comprises measuring a power pack output voltage (408),
wherein the power pack charging circuit output characteristic comprises a power pack charging circuit output voltage (406), and
wherein the setting sets the power pack charging circuit output voltage to the value that is one of substantially equal to and less than the power pack output voltage.

4. The method of any of claims 1, 2, or 3, wherein determining the power pack output value comprises measuring a power pack electrical current output (508),
wherein the power pack charging circuit output characteristic comprises a power pack charging circuit electrical current output (506), and
wherein the setting sets the power pack charging circuit electrical current output to a value that is one of substantially equal to and less than the power pack electrical current output.

5. The method of claim 4, wherein the determining a power pack output value comprises measuring, with a battery fuel gauge (212), an average electrical current flowing through the power pack over a time duration, and
wherein the setting sets the power pack charging circuit electrical current output to a value that is one of substantially equal to and less than the average electrical current.

6. The method of claim any of claims 4 or 5, wherein the determining a power pack output value comprises measuring a time sequence of power pack electrical current output values (312, 506), and
wherein the setting comprises setting, in response to determining each respective value within the time sequence of power pack electrical current output values, the power pack charging circuit electrical current output to a value that is one of equal to and less than the respective value (508).

7. The method of any of claims 4, 5, or 6,
wherein the power pack charging circuit is configurable to output a selected output current value within a plurality of electrical current output values (310), and
wherein setting the power pack charging circuit electrical current output comprises setting the power pack charging circuit electrical current value to one of the plurality of electrical current output values that is closest to and less than the power pack electrical current output.

8. An apparatus (200, 300) for controlling a power pack charging circuit, the apparatus comprising:
a power pack status monitor receiver (216, 316) configured to receive information supporting a determination that an operating condition of a device satisfies a condition for halting charging of a power pack of the device while the device is connected to a charging source;
a power pack output monitor (212, 312, 318) configured to determine, while the operating condition of the device satisfies the condition for halting charging of the power pack, a power pack output value; and
a charging circuit controller(216, 316), coupled to the power pack status monitor receiver and the power pack output monitor, configured to set, while the operating condition of the device satisfies the condition for halting charging of the power pack, a power pack charging circuit output characteristic to an output value that is determined based upon the power pack output value to preclude charging of the power pack.

9. The apparatus of claim 8, wherein the power pack status monitor receiver receives information supporting a determination that a power pack temperature exceeds a charging cutoff temperature threshold (216, 230, 316, 330).

10. The apparatus of any of claims 8 or 9,
wherein power pack output monitor is configured to determine the power pack output value by measuring a power pack charging circuit output voltage (406),
wherein the power pack charging circuit output characteristic comprises a power pack charging circuit output voltage, and
wherein the charging circuit controller is configured to set the power pack charging circuit output voltage to the value that is one of substantially equal to and less than the power pack output voltage (408).

11. The apparatus of any of claims 8, 9, or 10,
wherein power pack output monitor is configured to determine the power pack output value by measuring a power pack electrical current output (506),
wherein the power pack charging circuit output characteristic comprises a power pack charging circuit electrical current output, and
wherein the charging circuit controller is configured to set the power pack charging circuit electrical current output to the value that is one of substantially equal to and less than the power pack electrical current output (508).

12. The apparatus of claim 11, wherein the power pack output monitor is configured to determine a power pack output value by measuring, with a battery fuel gauge (212), an electrical current flowing through the power pack over a time duration, and
wherein the charging circuit controller is configured to set the power pack charging circuit electrical current output to the value that is one of substantially equal to and less than the average electrical current value.

13. The apparatus of any of claims 11 or 12, the power pack output monitor is configured to determine a power pack output value by measuring a time sequence of power pack electrical current output values (312, 506), and
wherein the charging circuit controller further configured to set, in response to determining each respective value within the time sequence of power pack electrical current output values, the power pack charging circuit output to a value that is one of equal to and less than the respective value (508).

14. The apparatus of any of claims 11, 12, or 13,
wherein the power pack charging circuit is configurable to output a selected output current value within a plurality of electrical current output values (310), and
wherein the charging circuit controller is further configured to set the power pack charging circuit electrical current value to one of the plurality of electrical current output values that is closest to and less than the power pack electrical current output.

15. A computer program for instructing a computer to perform the method of any one of claims 1, 2, 3, 4, 5, 6, or 7.
